# EUROPÄISCHE PATENTSCHRIFT

(11) **EP 2 456 051 B1**
(45) Veröffentlichungstag und Bekanntmachung des Hinweises auf die Patenterteilung: **12.08.2020**
(21) Anmeldenummer: 11189398.8
(22) Anmeldetag: 16.11.2011
(51) Int. Cl.: H02K 5/22, H02K 11/00, H02M 7/00

(54) **Frequenzumrichter zum Steuern eines Elektromotors**
Frequency converter for controlling an electric motor
Commutateur de fréquence destiné à commander un moteur électrique

(30) Priorität: 22.11.2010 DE 102010051891
(43) Veröffentlichungstag der Anmeldung: 23.05.2012
(73) Patentinhaber: Kostal Industrie Elektrik GmbH, 58513 Lüdenscheid (DE)
(72) Erfinder: Grützmacher, Thomas, 42859 Remscheid (DE); Haase, Daniel, 59823 Arnsberg (DE); Penzek, Steffen, 59192 Bergkamen (DE); Peters, Thomas, 59846 Sundern (DE); Rilling, Herwig, 59174 Kamen (DE)
(74) Vertreter: Kerkmann, Detlef

(56) Entgegenhaltungen:
- EP-A1- 2 110 929
- DE-A1- 10 109 797
- DE-A1-102006 016 271
- DE-A1-102008 058 511

## Beschreibung

Die Erfindung betrifft einen Frequenzumrichter zum Steuern eines Elektromotors mit einem zur Montage auf dem Motorgehäuse vorgesehenen Umrichtergehäuse, wobei zwischen dem Motorgehäuse und dem Umrichtergehäuse ein einen Klemmenkasten ersetzendes Zwischenteil angeordnet ist, wobei das Umrichtergehäuse aus einem einen Schaltungsträger mit den elektronischen Bauelementen der Steuer- und Leistungselektronik des Frequenzumrichters aufnehmenden Gehäuseunterteil und einem Gehäusedeckel besteht, wobei das Zwischenteil Halteelemente zur mechanischen Befestigung des Gehäuseunterteils an diesem aufweist, und wobei das Gehäuseunterteil an seiner Unterseite mit einer Öffnung versehen ist.

Frequenzumrichter der hier angesprochenen Art werden als statische Frequenzumrichter zum Betrieb von Elektromotoren, insbesondere von Synchron- und Asynchronmaschinen eingesetzt, wobei die Verbindung von Frequenzumrichter und Elektromotor zu einer baulichen Einheit hinsichtlich elektromagnetischer Störeinflüsse deutliche Vorteile gegenüber der vom Motor getrennten Aufstellung des Frequenzumrichters in einem separaten Schaltschrank hat.

Aus der DE 36 42 724 A1 ist es bekannt, einen Frequenzumrichter insgesamt in einem als Klemmenkasten bezeichneten Umrichtergehäuse anzuordnen. Die netzseitige Anschlussleitung des Frequenzumrichters ist als angewachsenes Kabel aus dem Umrichtergehäuse herausgeführt. Zur Verbindung der Ausgangsseite des Frequenzumrichters mit den Motorkontakten ist an dem Umrichtergehäuse ein Stutzen mit darin aufgenommenen Steckerstiften angeformt. Durch Aufstecken des Klemmenkastens auf dem Motorgehäuse werden diese Steckerstifte mit entsprechend ausgebildeten, motorseitigen Steckbuchsen kontaktiert, wobei die Steckbuchsen mit den Motoranschlussleitungen elektrisch verbunden sind.

Die EP 0 958 646 B1 offenbart einen Frequenzumrichter bei dem zwischen dem Motorgehäuse und dem Umrichtergehäuse ein Zwischenteil angeordnet ist, das einen üblicherweise dort vorhandenen Klemmenkasten ersetzt. Das Zwischenteil bildet dabei gleichsam ein Gehäuseunterteil des Umrichtergehäuses aus, während die gesamte Elektronik des Frequenzumrichters in dem darauf zu befestigenden Gehäuseoberteil aufgenommen ist. Die elektrische Kontaktierung der Frequenzumrichter-Elektronik mit den im Zwischenteil vorhandenen Anschlusselementen erfolgt dabei über Steckverbinder.

Die DE 10 2008 058 511 A1 offenbart einen Frequenzumrichter gemäß dem Oberbegriff des Patentanspruchs 1. Zwischen dem Motorgehäuse und dem zweiteiligen Umrichtergehäuse ist auch hier ein Zwischenteil angeordnet. Bei dem Zwischenteil werden die Motoranschlussleitungen auf den Schraubklemmen eines Klemmsteins aufgelegt, und zwar vor der Montage des Gehäuseunterteils des Umrichtergehäuses. Bei der Montage des Gehäuseunterteils auf dem Motor bzw. dem Zwischenteil werden dann einander zugeordnete Steckverbinderteile des Zwischenteils und des Umrichters miteinander in Eingriff gestellt. Dadurch werden die erforderlichen elektrischen Verbindungen zwischen dem Umrichter und dem Motor hergestellt.

Bei Elektromotoren geringer bis mittlerer Leistungsklassen und passend dazu ausgebildeten Frequenzumrichtern sind dies durchaus vorteilhafte Ausgestaltungen. Diese sind allerdings nicht mehr einsetzbar bei Frequenzumrichtern, die zum Einsatz an Elektromotoren höherer Leistung vorgesehen sind, da die hierbei verwendeten Steckverbinder bei den dann auftretenden Strömen kein geeignetes Kontaktierungsmittel mehr darstellen. Der Frequenzumrichter gemäß der vorliegenden Erfindung hat gegenüber den gezeigten, vorbekannten Lösungen den Vorteil, deutlich höhere Ströme tragen zu können, ohne dabei auf Flexibilität und Bequemlichkeit bei der Montage zu verzichten.

Dies wird erfindungsgemäß dadurch erreicht, dass durch die Öffnung hindurch nach Befestigung des Gehäuseunterteils auf dem Zwischenteil und vor dem Aufsetzen des Gehäusedeckels ein Klemmstein des Elektromotors zum Befestigen und/oder Lösen elektrischer Anschlussleitungen an diesem von außen zugänglich ist.

Durch den Einsatz von Schraub- oder Federklemmen anstelle von Steckkontakten zur Verbindung der Motoranschlussleitungen mit den Zuleitungen vom Schaltungsträger des Frequenzumrichters wird eine erheblich höhere Stromtragfähigkeit der elektrischen Verbindungen erreicht, so dass der erfindungsgemäße Gegenstand insbesondere für Elektromotoren höherer Leistungsklassen geeignet ist.

Das erfindungsgemäß ausgeführte Zwischenteil ist vorzugsweise direkt auf einem Anschlussstutzen des Motorgehäuses aufgeschraubt.

In einer bevorzugten Ausführungsform der Erfindung besteht das Gehäuseunterteil aus einem Material mit einer guten Wärmeleitfähigkeit, also z.B. aus Aluminium, und ist an seiner unteren Außenwand mit Kühlrippen versehen, so dass die insbesondere in den Leistungsbauelementen des Frequenzumrichters entstehende Verlustwärme besonders effektiv abgeführt werden kann.

Weitere vorteilhafte Ausgestaltungen und Weiterbildungen des erfindungsgemäßen Frequenzumrichters werden anhand der Zeichnung erläutert.

Es zeigen:
- Figur 1: Einen erfindungsgemäßen, auf einem Motorgehäuse eines Elektromotors montierten Frequenzumrichter ohne Gehäusedeckel
- Figur 2: Einen Elektromotor mit freiliegendem Klemmstein (ohne Klemmenkasten)
- Figur 3: Einen Elektromotor mit einem darauf montiertem Zwischenteil zur Aufnahme des Gehäuseunterteils des Frequenzumrichters

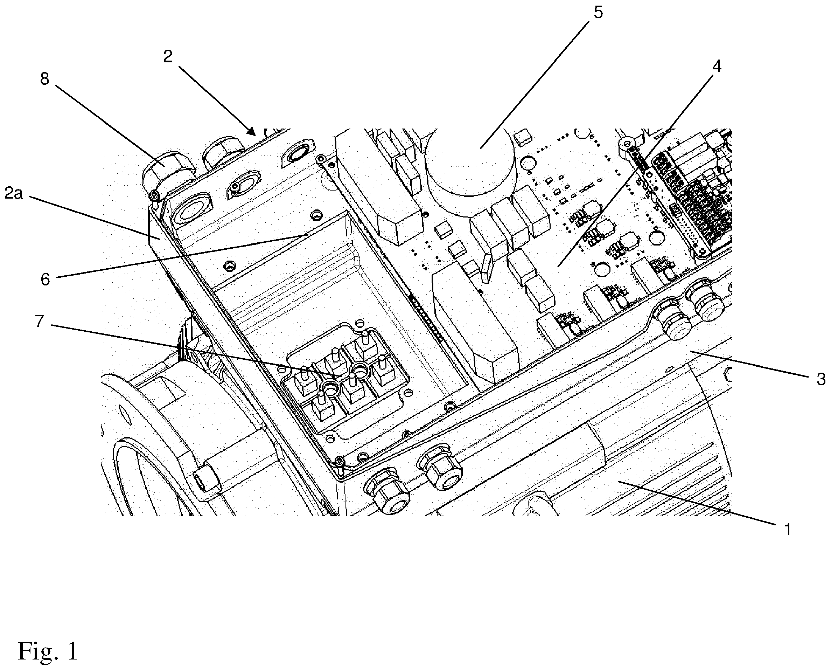

In Fig. 1 ist ein erfindungsgemäßer Frequenzumrichter zu sehen, der auf einem Elektromotor montiert ist. Das Umrichtergehäuse 2 besteht dabei aus einem Gehäuseunterteil 2a, welches auch verschiedene funktionale Aspekte zu erfüllen hat, und einem (in dieser Zeichnung nicht gezeigten) Gehäusedeckel 2b, der im wesentlichen lediglich die Aufgabe hat das Umrichtergehäuse 2 zu verschließen. Das Gehäuseunterteil 2a enthält einen als Leiterplatte ausgebildeten Schaltungsträger 4, auf dem die elektronischen Bauelemente 5 der Steuer- und Leistungselektronik des Frequenzumrichters aufgenommen sind. Das Gehäuseunterteil 2a, welches bevorzugt aus einem Material mit einer guten Wärmeleitfähigkeit, also z.B. aus Aluminium besteht, ist an seiner unteren Außenwand mit Kühlrippen 9 versehen, über die die insbesondere in den Leistungsbauelementen des Frequenzumrichters entstehende Verlustwärme abgeführt wird. An den seitlichen Außenwänden des Gehäuseunterteils 2a sind Kabelverschraubungen 8 angeordnet, durch die zumindest eine Netzanschlussleitung sowie weitere Steuer- und/oder Sensorleitungen von außen in das Innere des Umrichtergehäuses 2 geführt werden.

Die mechanische Befestigung des Gehäuseunterteils 2a des Umrichtergehäuses 2 an dem Motorgehäuse 1 erfolgt mittels eines Zwischenteils 3, das zugleich die Aufgabe eines Klemmenkastens erfüllt.

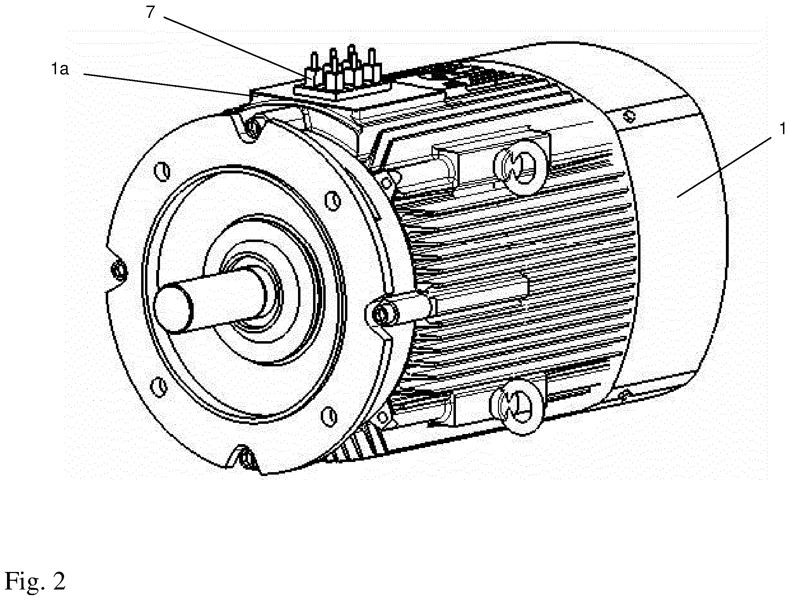

In Fig. 2 ist der Elektromotor vor der Montage des Zwischenteils 3, also mit freiliegendem Klemmstein 7 zu sehen. Der Klemmstein 7, dessen elektrische Anschlussklemmen innerhalb des Motorgehäuses 1 mit den Anschlussleitungen des Elektromotors verbunden sind, ist auf einem Anschlussstutzen 1a des Motorgehäuses 1 angeordnet.

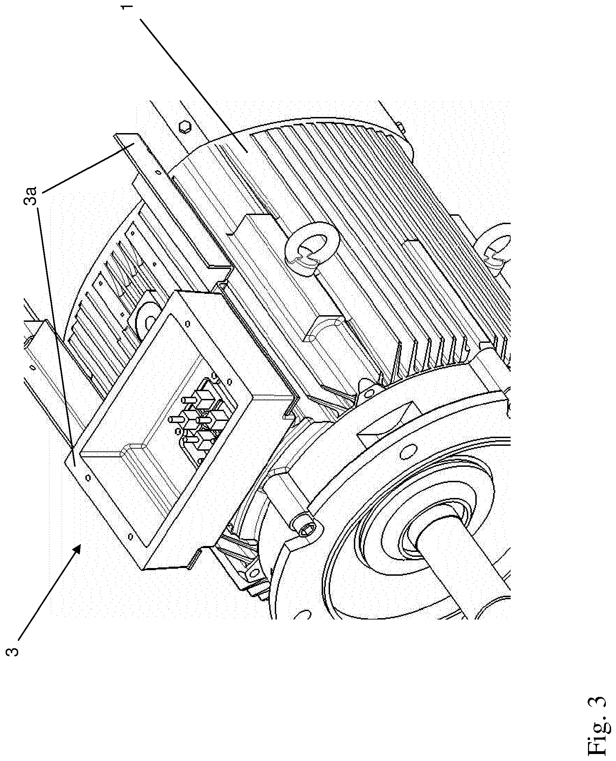

Das Zwischenteil 3 wird, wie in Fig. 3 zu sehen, direkt auf dem Anschlussstutzen 1a des Motorgehäuses 1 aufgeschraubt. Das Zwischenteil 3 bildet dabei einerseits einen den Klemmstein 7 schützend umgebenden Schacht und andererseits zur Befestigung des Gehäuseunterteils 2a des Umrichtergehäuses 2 an dem Motorgehäuse 1 vorgesehene Halteelemente 3a aus. An diesen Halteelementen 3a wird das Gehäuseunterteil 2a beispielsweise mittels Schrauben befestigt.

In dem in Fig. 1 gezeigten Zustand, in dem das Gehäuseunterteil 2a mit dem die elektronischen Bauelemente 5 der Steuer- und Leistungselektronik des Frequenzumrichters tragenden Schaltungsträger 4 auf dem Zwischenteil 3 montiert ist, ist der Klemmstein 7 des Elektromotors zur Handhabung der Anschlussleitungen bequem zugänglich, so dass die von dem Schaltungsträger 4 der Elektronik des Frequenzumrichters ausgehenden Leitungen ohne weiteres auf den Klemmen des Klemmsteins 7 je nach Ausführung desselben durch Festklemmen oder Festschrauben aufgelegt werden können. Die von außen durch die an den seitlichen Außenwänden des Gehäuseunterteils 2a vorhandenen Kabelverschraubungen 8 hindurch geführten äußeren Zuleitungen können im gleichen Arbeitsgang an dafür vorgesehenen Klemmen auf dem Schaltungsträger 4 der Elektronik des Frequenzumrichters aufgelegt werden.

Nach erfolgter interner Verdrahtung wird der Gehäusedeckel auf das Gehäuseunterteil 2a aufgesetzt und mit diesem zum sicheren Verschluss des Umrichtergehäuses 2 verschraubt.

## Patentansprüche

1. Frequenzumrichter zum Steuern eines Elektromotors mit einem zur Montage auf dem Motorgehäuse (1) vorgesehenen Umrichtergehäuse (2), wobei zwischen dem Motorgehäuse (1) und dem Umrichtergehäuse (2) ein einen Klemmenkasten ersetzendes Zwischenteil (3) angeordnet ist, wobei das Umrichtergehäuse (2) aus einem einen Schaltungsträger (4) mit den elektronischen Bauelementen (5) der Steuer- und Leistungselektronik des Frequenzumrichters aufnehmenden Gehäuseunterteil (2a) und einem Gehäusedeckel besteht, wobei das Zwischenteil (3) Halteelemente (3a) zur mechanischen Befestigung des Gehäuseunterteils (2a) an diesem aufweist, und wobei das Gehäuseunterteil (2a) an seiner Unterseite mit einer Öffnung (6) versehen ist, **dadurch gekennzeichnet, dass** durch die Öffnung (6) hindurch nach Befestigung des Gehäuseunterteils (2a) auf dem Zwischenteil (3) und vor dem Aufsetzen des Gehäusedeckels ein Klemmstein (7) des Elektromotors zum Befestigen und/oder Lösen elektrischer Anschlussleitungen an diesem von außen zugänglich ist.

2. Frequenzumrichter nach Anspruch 1, **dadurch gekennzeichnet, dass** das Zwischenteil (3) direkt auf einem Anschlussstutzen (1a) des Motorgehäuses (1) aufgeschraubt ist.

3. Frequenzumrichter nach Anspruch 1 oder 2, **dadurch gekennzeichnet, dass** das Gehäuseunterteil (2a) aus einem Material mit einer guten Wärmeleitfähigkeit besteht und an seiner unteren Außenwand mit Kühlrippen (9) versehen ist.

## Claims

1. A frequency converter to control an electric motor with a converter housing (1) intended for mounting on the motor housing (2), whereby an intermediate part (3) replacing a terminal housing is fitted between the motor housing (1) and the converter housing (2), where the converter housing (2) consists of a lower housing section (2a) containing an interconnect device (4) made up of the electronic component elements (5) of the control and power electronics of the frequency converter and a housing cover, whereby the intermediate part (3) has retainer elements (3a) providing mechanical attachment to the housing cover (2a) and where the underside of the lower housing section (2a) has an opening (6); **the whole characterised by the fact** that, after the lower housing section (2a) has been attached to the intermediate part (3) and before the housing cover is fitted, a terminal piece (7) on the electric motor for attaching or removing electrical connecting wiring is accessible from the exterior through this opening (6).

2. A frequency converter as in claim 1, **characterised by** the fact that the intermediate part (3) is screwed directly to a connecting support (1a) on the motor housing (1).

3. A frequency converter as in claim 1 or 2, **characterised by** the fact that the lower housing section (2a) is made of a material with good thermal conductivity and is provided with cooling ribs (9) on its lower exterior wall.

## Revendications

1. Convertisseur de fréquence pour la commande d'un moteur électrique, avec un boîtier de convertisseur (2), destiné à être monté sur le carter du moteur (1), sachant que, entre le carter de moteur (1) et le boîtier de convertisseur (2), est disposée une pièce de transition (3), qui remplace une boîte à bornes, sachant que le boîtier de convertisseur (2) consiste en une partie inférieure de boîtier (2a), qui reçoit un support de commutation (4) comportant les éléments de construction électroniques (5) de l'électronique de commande et de puissance du convertisseur de fréquence, et un couvercle de boîtier,
sachant que la pièce de transition (3) présente des éléments de maintien (3a) pour la fixation mécanique de la partie inférieure du boîtier (2a) à celle-ci, et
sachant que la partie inférieure du boîtier (2a) est pourvue d'une ouverture (6) sur son côté inférieur,
**caractérisé en ce que,**
après la fixation de la partie inférieure du boîtier (2a) sur la pièce de transition (3) et avant la mise en place du couvercle du boîtier, un bloc de répartition (7) du moteur électrique est accessible de l'extérieur à travers l'ouverture (6) pour le branchement et / ou le débranchement de lignes de raccordement sur celui-ci.

2. Convertisseur de fréquence selon la revendication 1, **caractérisé en ce que** la pièce de transition (3) est vissée directement sur une tubulure de raccordement (1a) du carter du moteur (1).

3. Convertisseur de fréquence selon la revendication 1 ou 2, **caractérisé en ce que** la partie inférieure du boîtier (2a) consiste en un matériau possédant une bonne conductibilité thermique et est pourvue de nervures de réfrigération (9) sur sa paroi extérieure, intérieure.
